# EUROPEAN PATENT APPLICATION

(11) **EP 4 574 308 A1**
(43) Date of publication of application: **25.06.2025**
(21) Application number: 23218120.6
(22) Date of filing: 19.12.2023
(51) Int. Cl.: B22F 1/18, B22F 9/04, C22C 29/08, C22C 29/06

(54) **A METHOD OF MAKING A COMPOSITE POWDER**

(71) Applicant: Wolfram Bergbau und Hütten AG, 8543 St. Martin im Sulmtal (AT)
(72) Inventor: CLAESSON, Björn, 8543 St. Martin im Sulmtal (AT); ÅKESSON, Leif, 8543 St. Martin im Sulmtal (AT); ZIMMERL, Thomas, 8543 St. Martin im Sulmtal (AT)
(74) Representative: Sandvik

(57) **Abstract**

The present invention relates to a method of making a composite powder comprising WC particles at least partly coated with metal binder. The method comprises heating a Zn metal source and powders comprising WC and at least one metal binder powder to a temperature of between 650 and 850 °C so that a Zn melt is formed wherein the metal binder is dissolved. The Zn is then evaporated from the melt at a temperature of between 850 and 1000 °C forming a residue comprising WC grains coated with metal binder. The residue is then subjected to a crushing and/or milling step to obtain a powder. The WC particles in the final powder will then at least partly be coated with the binder metal.

## Description

The present invention relates to a method of making a composite powder comprising WC particles that are at least partly coated with a metal binder.

### Background

WC powders have been used in the art of manufacturing cemented carbides for more than a hundred years. The most common way to make a cemented carbide is to mix the WC powder with a binder metal powder, e.g. Co, Ni or Fe, and possibly other additives, by milling and then, pressing and sintering the powders into a solid cemented carbide. The milling step is important to blend the powders. Long milling times are usually required to obtain a good distribution of the metal binder and WC. However, milling can reduce the grain size of the WC grains, especially for coarser grain sizes.

In certain cemented carbide types, it can be beneficial to maintain the grain size distribution of the WC as much as possible, i.e. if a narrow grain size distribution or a bimodal/multimodal grain size distribution is required. Subjecting the WC powder to a conventional milling step can alter the WC grain size distribution quite a lot. Also, it might be beneficial to maintain the original shape of the WC grains as much as possible. If conventional milling is performed, this will not be the case since the shape and size of the WC grains will be altered. No, or a short milling step will not provide a good enough metal binder distribution. Alternative methods of achieving a good metal binder distribution can be to provide WC particles with a metal binder coating. The binder metal can be deposited by e.g. sputtering techniques, precipitation of a salt of the desired binder metal, plating etc.

The known methods all have their limitations, e.g. problems with complicated processes, limitation in binder metal content etc.

One object of the present invention is to provide a method of making a WC powder coated with metal binder where the metal binder is metallurgically bonded to the WC grains.

Another object of the present invention is to provide a method of making a WC powder coated with metal binder where the amount of metal binder is not limited.

Another object of the present invention is to achieve a method of making such a composite powder in an efficient and easy way.

### Detailed description of the present invention

The present invention relates to a method of making a composite powder comprising WC particles at least partly coated with metal binder comprising the following steps:
- providing powders comprising WC and at least one metal binder powder,
- providing a Zn metal source in contact with the powders,
- heating the Zn metal source and the powders to a temperature of between 650 and 850°C so that a Zn melt is formed wherein the metal binder is dissolved;
- evaporating the Zn from the melt at a temperature of between 850 and 1000 °C forming a residue comprising WC grains coated with metal binder,
- subjecting the residue to a crushing and/or milling step to obtain a composite powder.

The powders comprising WC and at least one metal binder are free from sintered cemented carbide scrap/pieces.

The WC powder used can be any WC powder known in the art. The WC powder can have an average particle size between 0.5 and 500 µm (FSSS), preferably between 0.5 and 50 µm. The amount of WC powder in the powder blend is at least 70 wt%.

By a WC particle is herein meant a particle that can contain one or more WC grains. By WC grain is herein meant a single WC crystal. When WC powders are characterized, it is usually the particle size that is analyzed as compared to a sintered cemented carbide where it is the WC grain size that is measured since the WC grains are separated from each other during the manufacturing process.

The metal binder powders can be any metal that is used for cemented carbides. Preferably, the metal binder powders are one of, or an alloy of two or more of Fe, Ni and Co. The metal binder powder is present in the powder blend in the amount of between 1 to 20 wt%, preferably between 3 to 15 wt%, most preferably 3 to 12 wt%.

In one embodiment of the present invention, Cr can be added as a metal, either alone or alloyed with one or more of the metal binders. The Cr is than added so that the amount of Cr is less than 15wt% of the total amount of binder metal powders, preferably less than 10wt% the total amount of binder metal powders.

In one embodiment of the present invention, the metal binder powders do not contain an organic binder. Sometimes, powder raw materials can contain organic binders e.g. wax or PEG (polyethylene glycol).

In one embodiment of the present invention, other powders common in the art of cemented carbide manufacturing could also be added to the powder blend. Examples of such powders are carbides, nitrides, oxides or mixtures thereof, of one or more of Ti, Ta, Nb, Cr, Zr, V and Mo. The amount of these other powders depends on the final use of the cemented carbide to be made from the composite powder.

The Zn metal source can be provided in different ways, for example as powder or as solid pieces. It is also possible to provide the Zn by allowing it to condense on the powder directly after it is evaporated from a previous batch. The amount of Zn should be at least in such amount so that the weight ratio Zn/metal binder is at least 5:1.

The powders comprising WC and at least one metal binder powder, and possible other added powders, can be placed together with the Zn metal source with or without mixing the powders before. If the powders are mixed, it can be done by e.g. blending or milling equipment like e. g. ball mills, plowshare mixers.

The powders comprising WC and at least one metal binder powder, is placed in contact with the Zn source in a container.

The powders comprising WC and at least one metal binder powder and the Zn source are then heated to a temperature of between 650 and 850°C, preferably between 700 and 830°C. The Zn source will then create a melt into which the metal binder will be dissolved and thus creating an alloy. The WC particles are also in the melt but are not dissolved. The heating is preferably done in a furnace in a non-reactive atmosphere, e.g. in Ar or He.

In one embodiment of the present invention, the container with the powder blend and the Zn source is a graphite crucible.

After dissolving the metal binder, the Zn is evaporated by subjecting the melt with the WC grains to a temperature of between 850 and 1000 °C, preferably between 870 and 970°C.

The evaporation can be done with or without applying vacuum. By vacuum is herein meant a pressure below 0.2 mBar. Applying vacuum reduces the time it takes to evaporate the Zn.

After evaporation of Zn, the remaining residue comprises WC particles coated with metal binder. The remaining residue is usually in the form of a cake where the WC particles are loosely bonded to each other, i.e. the WC particles are not sintered together. The cake can easily be crushed with a hammer or jaw breaker.

The remaining residue is preferably crushed and/or milled in order to obtain the final composite powder.

The invention also relates to a composite powder made according to the method described above. The composite powder contains at least 70 wt% WC. The average WC particle size in the composite powder is 0.5 and 500 µm (FSSS), preferably between 0.5 and 50 µm.

The composite powder comprises WC particles at least partly coated with binder metal. This can be seen in a SEM/LOM image of the powder. The shape of the WC particles is the same as in the WC raw material, i.e. rounded. The WC thus have a hexagonal close-packed (hcp) lattice like in the WC raw material. This is to compare with the WC grains in a sintered cemented carbide that has gone through a conventional manufacturing process, i.e. including milling and sintering (i.e. at a temperature above approx. 1300°C), which have a truncated trigonal prism shape (triangular shape). The WC grains in a powder made with the Zn process from cemented carbide scrap will thus have the truncated trigonal prism shape, i.e. the WC grains will have a faceted more or less flat surface, since the WC grains has gone through a conventional manufacturing process previously.

The composite powder comprises WC in an amount of at least 70 wt%. The average WC particle size in the composite powder between 0.5 and 500 µm, preferably between 0.5 and 50 µm.

The metal binder can be any metal that is used for cemented carbides. Preferably, the metal binder powders are one of, or an alloy of two or more of Fe, Ni and Co. The amount of metal binder in the composite powder is between 2 and 20 wt%, preferably between 3 to 15 wt%.

In one embodiment of the present invention, Cr can be present in the metal binder. The Cr is than present in an amount of less than 15 wt% of the total amount of binder metal, preferably less than 10 wt% of the total amount of binder metal.

The powder can also contain other additives common in the art of making cemented carbides, for example powders like carbides, nitrides, oxides or mixtures thereof, of one or more of Ti, Ta, Nb, Cr, Zr, V and Mo. The amount of additives depends on the final use of the cemented carbide to be made from the composite powder. When the composite powder comprises any of these additional powders, grains from those powders will also at least partly be coated with the metal binder.

### Drawings

Figures 1A and 1B shows SEM images of Sample 1 of the invention from Example 1 where, in Figure 1B, the white area, A, is an uncoated area of the WC, the grey areas, B, are Co binder and the darker spots, C, are areas with a thicker Co coating.
Figure 2 shows a SEM image of a cross section of Sample 3 of the invention from Example 1. It can clearly be seen that the WC particle, A, is coated a layer of Co, B.
Figures 3A and 3B shows SEM images of a comparative powder as disclosed in Example 2. where, in Figure 3B, the brighter area, A, is an uncoated area of the WC, whereas the darker spots, B, are Co.
Figures 4A and 4B shows SEM images of a comparative powder as disclosed in Example 3.

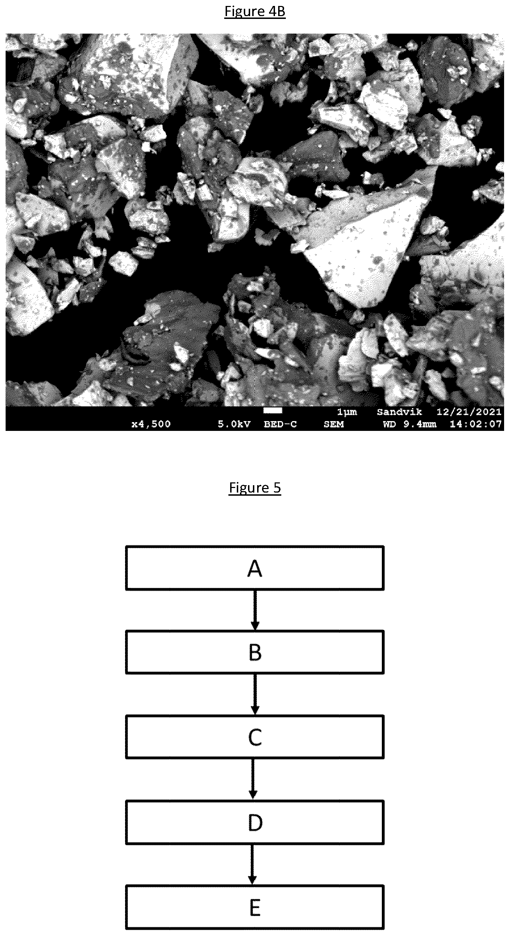

Figure 5 shows a schematic view of one embodiment of the present invention where step A is providing powders comprising WC and at least one metal binder powder, step B is providing a Zn metal source, step C is heating the Zn metal source and the powders to a temperature of between 650 and 850 °C so that a Zn melt is formed wherein the metal binder is dissolved, step D is evaporating the Zn from the melt at a temperature of between 850 and 1000°C forming a residue comprising WC particles coated with metal binder and step E is subjecting the residue to a crushing and/or milling step to obtain a powder.

### Example 1 (Invention)

Three different powder blends were prepared using the same WC raw material and Co powder. The WC powder had an average grain/particle size (FSSS) of 18.5 µm. The Co powder is pure Co, i.e. no organic binder such as e.g. PEG was included. The Co powder is from Shu Powders and have a grain size (FSSS) of 1.38 µm. Powder blends with compositions as shown in Table 1 was prepared by mixing it in a plastic can in a paint shaker for 5 minutes.

**Table 1**

| | Co (wt%) | WC |
|---|---|---|
| Sample 1 | 3 | balance |
| Sample 2 | 6 | balance |
| Sample 3 | 7.5 | balance |

1 kg of a powder blend was put together with 0.7 kg Zn in a graphite crucible which was then covered with a graphite cover.

The graphite crucible was put in a furnace and the temperature was increased during 3 hours to 840 °C, where the dwell time was 9 hours in Ar at atmospheric pressure. The temperature was then increased further during 30 minutes to 960 °C where dwell time was 20 hours allowing the Zn to evaporate. During the first 6 hours, the pressure was decreased from 1020 mbar to 20mbar. The remaining time the pressure was 0.1 mbar. After the evaporation step, the crucible was left to cool to room temperature. The powder residue is then in the shape of a loosely packed "cake". Small amounts of each sample were analyzed for trace elements, the results are shown in Table 2.

**Table 2**

| | Al (%) | Cu (%) | Zn (%) | Cr (%) | Fe (%) |
|---|---|---|---|---|---|
| Sample 1 | 0.003 | 0.003 | 0.006 | 0.004 | 0.056 |
| Sample 2 | 0.003 | 0.0015 | 0.0025 | 0.008 | 0.04 |
| Sample 3 | 0.004 | 0.001 | 0.002 | 0.004 | 0.018 |

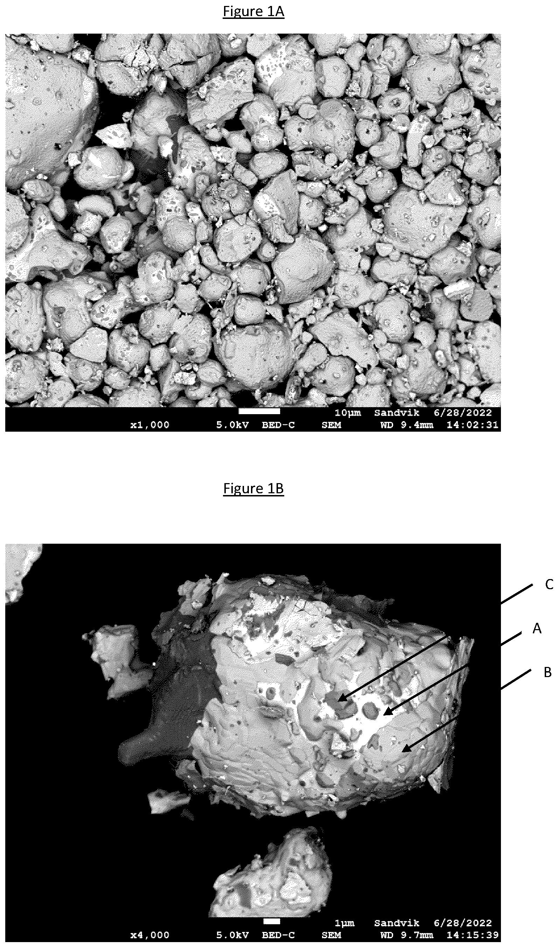

SEM images were taken of some of the powder samples. In Figures 1A and 1B images of Sample 1 is shown in two different magnifications. In Figure 1B it can clearly be seen that the WC particle (A) is, to a large extent, coated with Co binder. The grey areas (B) show a thinner Co layer and the darker areas (C) shows a thicker Co layer.

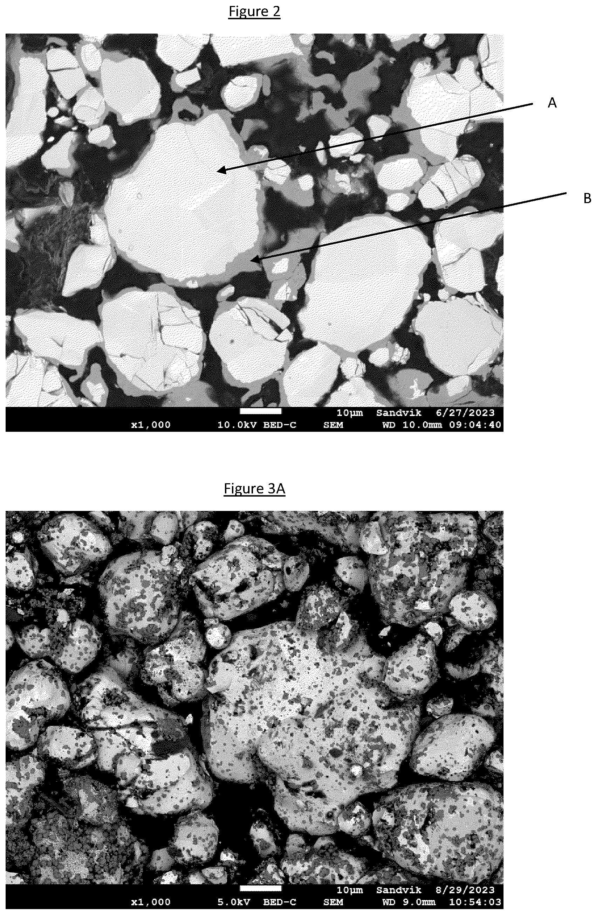

Figure 2 shows a SEM image of a cross section of Sample 3 of the invention from Example 1. It can clearly be seen that the WC particle, A, is coated with a layer of Co, B.

### Example 2 (Comparative)

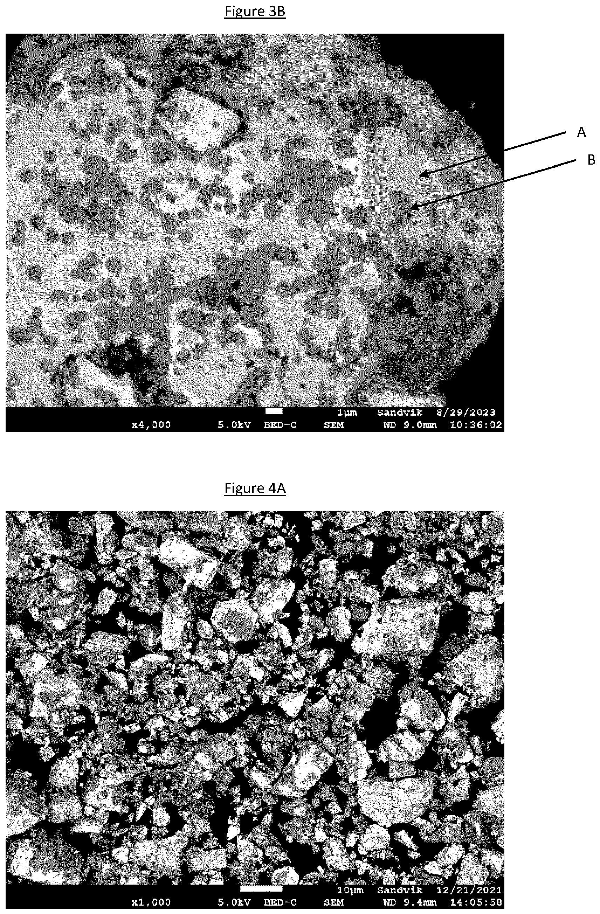

A powder made by the so-called sol-gel method, was also prepared. The WC powder was subjected to a solution including a Co- salt which was, when removing the solvent, precipitated onto the surface of the WC particles. This powder is herein after called Comparative 1. SEM Images of the powder in two different magnifications were done, Figures 3A and 3B. In Figure 3B, the brighter area, A, is an uncoated area of the WC, whereas the darker spots, B, are Co. Compared the samples prepared according to the present invention, the powder manufactured by the sol-gel method have a less continuous Co layer, more like spots.

### Example 3 (Comparative)

A powder made from cemented carbide scrap through the Zn- process, using the same process as in Example 1 was produced. This powder is herein after called Comparative 2. SEM Images of the powder in two different magnifications were done, Figures 4A and 4B.

## Claims

1. A method of making a composite powder comprising WC particles at least partly coated with metal binder comprising the following steps:
- providing powders comprising WC and at least one metal binder powder,
- providing a Zn metal source in contact with the powders,
- heating the Zn metal source and the powders to a temperature of between 650 and 850°C so that a Zn melt is formed wherein the metal binder is dissolved;
- evaporating the Zn from the melt at a temperature of between 850 and 1000°C forming a residue comprising WC particles coated with metal binder,
- subjecting the residue to a crushing and/or milling step to obtain a powder.

2. A process according to claim 1 wherein vacuum is applied during the evaporation of Zn.

3. A process according to any of the preceding claims, wherein the Zn metal source and the powders are heated to a temperature of between 700 and 830°C.

4. A process according to any of the preceding claims, wherein the Zn is evaporated at a temperature of between 870 and 970°C.

5. A process according to any of the preceding claims wherein metal binder powder is one of, or an alloy of two or more of Fe, Ni and Co.

6. A process according to any of the preceding claims wherein the metal binder powder is Co.

7. A process according to any of the preceding claims wherein the metal binder powders do not contain an organic binder.

8. A process according to any of the preceding claims wherein the amount of metal binder in the powder blend is between 2 and 20 wt%.

9. A process according to any of the preceding claims wherein WC powder have an average particle size of between 0.5 to 500 µm (FSSS).

10. A process according to any of the preceding claims wherein Cr is added as a metal, either alone or alloyed with one or more of the metal binders in an amount less than 15 wt% of the total amount of binder metal powders.

11. A composite powder made according to the method of claim 1-10 wherein the WC particles are at least partly coated with binder metal.

12. A composite powder according to claim 11 wherein the binder metal content is between 2 and 20 wt%.

13. A composite powder according to claim Y wherein the average WC particle size is between 0.5 to 500 µm (FSSS).
